# EUROPEAN PATENT APPLICATION

(11) **EP 4 844 709 A1**
(43) Date of publication of application: **25.11.2026**
(21) Application number: 25275039.3
(22) Date of filing: 23.05.2025
(51) Int. Cl.: G06V 30/32, G06V 10/80, G06V 10/82

(54) **DISPLAY OUTPUT INTEGRITY MONITOR**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a method and system for monitoring integrity of display output of a display system for a vehicle. The method comprises receiving an image of the display output, identifying a symbology in the image and determining integrity of the image based on at least three dissimilar machine learning models.

## Description

### FIELD

The present invention relates to a method and system for monitoring integrity of display output of a display system for a vehicle.

### BACKGROUND

Operating a transportation involves providing accurate operational information of the transportation to the operator. This is particularly important in aviation industry where providing high integrity information to the operator is critical as it affect safety of the operators and occupants. A display system for an aircraft can be fully customised. However, in general, the display system includes commercial-off-the-shelf (COTS) devices along with customised parts of the display system to save cost and to aid design flexibility. It is desirable to produce integrated systems for aircrafts, but these integrated display systems may compromise the integrity of information being displayed. One reason may be due to the COTS devices lacking in formal D0-254 design assurance evidence. Another reason may be caused by integration, in particular, where there are legacy, potentially redundant, systems onboard the aircrafts. This kind of substandard display systems can lead to catastrophic hazards. The present invention aims to solve these issues.

### SUMMARY

According to an aspect of the present invention, there is provided a method for monitoring integrity of display output of a display system for a vehicle. The method comprises receiving an image of the display output; identifying a symbology in the image; determining integrity of the image based on at least three dissimilar machine learning models.

In this way, correctness of the symbology, and consequently, the display output is determined with high integrity. Usage of three different machine learning models provides more accuracy and flexibility in the design of the display system and its interaction with different systems on the vehicle.

In some examples, the method comprises each of the at least three dissimilar machine learning models calculating a respective confidence value for the image and identifying a respective tolerance threshold; each of the three dissimilar machine learning models determining whether the integrity of the image is compromised based on the respective confidence value and the respective tolerance threshold; and determining a consensus on the integrity of the image.

In this way, the assessment of the integrity is carried out with more accuracy having taken into account different parameters. This aids in providing flexibility in the design of the display system whilst maintaining the integrity level to meet the requirements.

In some examples, the method comprises updating counter based on determination of the integrity of the image.

In some examples, the determining integrity of the image comprises a step of comparing the symbology value with a data value from data bus of the vehicle.

In this way, the integrity of the value of the symbology associated with the image can be also checked not just the appearance of the symbology on the display system.

In some examples, the method comprises receiving the image from an image capture device system wherein the image capture device system is oriented to capture the display from the user's perspective. The image capture device system may comprise at least two image capture devices and each of the at least two image capture devices capture the image of the display output. The image capture device system may be mounted on a head wearable device or a cabin of a vehicle.

In this way, the display output is capture at the latest a point in a path to generate the displayed image (such as but not limited to when it is displayed to the user) and its integrity is checked. The image of display output is captured by two different image capture devices such that processing of the image for monitoring integrity receives at least two images for improved accuracy. It may also provide redundancy in the system so that when one image capture device malfunctions, the display system can still work with the remaining functional image capture device. The image capture device position can be determined by design of the aircraft and display system; so that there is a degree of flexibility in the designing of display system without compromising DAL.

In some examples, the method comprises providing a first image by a first image capture device to a first machine learning model of the at least three machine learning models; providing a second image by a second image capture device to a second machine learning model of the at least three machine learning models; and providing a third image by a third image capture device to a third machine learning model of the at least three machine learning models.

The image of display output is captured by three different image capture devices such that processing of the image for monitoring integrity is based on at least three input images. This improves accuracy of the integrity check. Each of the image capture devices is paired with a different machine learning model to ensure variants of input and processed data are included in a final determination of integrity of the display output. This also minimises degradation of the quality of image (input data for the machine learning model and consequently for the monitoring of display output integrity).

In some examples, the receiving of the image comprises generating a static background for the display; and capturing the image in synchronisation with the generation of the static background. The static background may comprise uniform colour.

In this way, the system is more reliable in capturing the symbology without background scene confusing the system. It also provides better quality training data for training machine learning models.

In some examples, the static background is provided by an electrochromic tinting system. In some examples, the static background is generated at a predetermined interval.

In some examples, the method comprises in response to determining integrity of the image is compromised, performing one or more remedial actions. The one or more remedial actions comprise displaying a blank screen; logging an error; outputting a warning signal, initiating soft restart of the display system, and initiating soft restart of the head wearable device.

According to another aspect of the present invention, there is provided a system for monitoring integrity of display output of a display system for a vehicle. The system is configured to receive an image of the display output; identify a symbology in the image; and determine integrity of the image based on at least three dissimilar machine learning models.

In some examples, the system is configured to calculate a respective confidence value for the image and identify a respective tolerance threshold by each of the at least three dissimilar machine learning models, wherein the each of the three dissimilar machine learning models determines whether the integrity of the image is compromised based on the respective confidence value and the respective tolerance threshold; and determine a consensus on the integrity of the image.

In some examples, the system is configured to compare the symbology value with a data value from data bus of the vehicle.

In some examples, the system is configured to receive the image from an image capture device system, wherein the image capture device system is oriented to capture the display from the user's perspective. The image capture device system may comprise at least two image capture devices and each of the at least two image capture devices captures the image of the display output. In some examples, the image capture device system is mounted on a head wearable device a cabin of a vehicle.

In some examples, the system is configured to provide a first image by a first image capture device to a first machine learning model of the at least three machine learning models; provide a second image by a second image capture device to a second machine learning model of the at least three machine learning models; and provide a third image by a third image capture device to a third machine learning model of the at least three machine learning models.

In some examples, the system is configured to generate a static background for the display; and capture the image with the image capture device system in synchronisation with the generation of the static background.

In some examples, the static background is provided by an electrochromic tinting system.

According to another aspect of the present invention, there is provided a head wearable device is configured to perform the any of the method described in the preceding paragraphs and/or comprise any of the system described in the preceding paragraphs.

According to another aspect of the present invention, there is provided a vehicle configured to perform the any of the method described in the preceding paragraphs and/or comprise any of the system described in the preceding paragraphs. The vehicle may be an aircraft.

### BRIEF DESCRIPTION OF THE FIGURES

Embodiments of the invention will now be described by way of example only with reference to the figures, in which:
Figure 1 shows a schematic diagram of operation of an example system for monitoring integrity of display output;
Figure 2 shows a schematic diagram of operation of an example system for monitoring integrity of display output with an integrity monitor;
Figure 3 shows a schematic diagram of an example system for monitoring integrity of display output;
Figure 4A-B show examples of images captured for the integrity monitor;
Figure 5 shows an example of an image captured for the integrity monitor with a static background;
Figure 6 shows an example of a display device;
Figure 7A-B show examples of display devices;
Figure 8 shows an example of symbology displayed for a user;
Figure 9 shows an example method for monitoring display output;
Figure 10 shows a schematic diagram of operation of an example system for monitoring integrity of display output;
Figure 11 shows an example system overview of a system for monitoring integrity of display output;
Figure 12 shows an example method for monitoring display output; and
Figure 13 shows an example of a vehicle.

### DETAILED DESCRIPTION

The present invention relates to providing display output monitors to maintain the integrity of the display output so that the standard required by the industry in which the display system operates are met. In particular, the invention is applicable to any type of vehicle that relates to high integrity display is necessary. For example, the vehicle may be a land-based transport, an aircraft or maritime transport. The present invention is described mainly in the context of aviation but the invention is applicable to any type of vehicle that relates to high integrity display is necessary. For example, the invention may relate to an advance driver assistance system on a land-based transport where display of speed needs to be accurately displayed. Another example may be the invention relating to a navigation system of a maritime transport where mapping of (e.g., depth) under the sea needs to be accurately displayed.

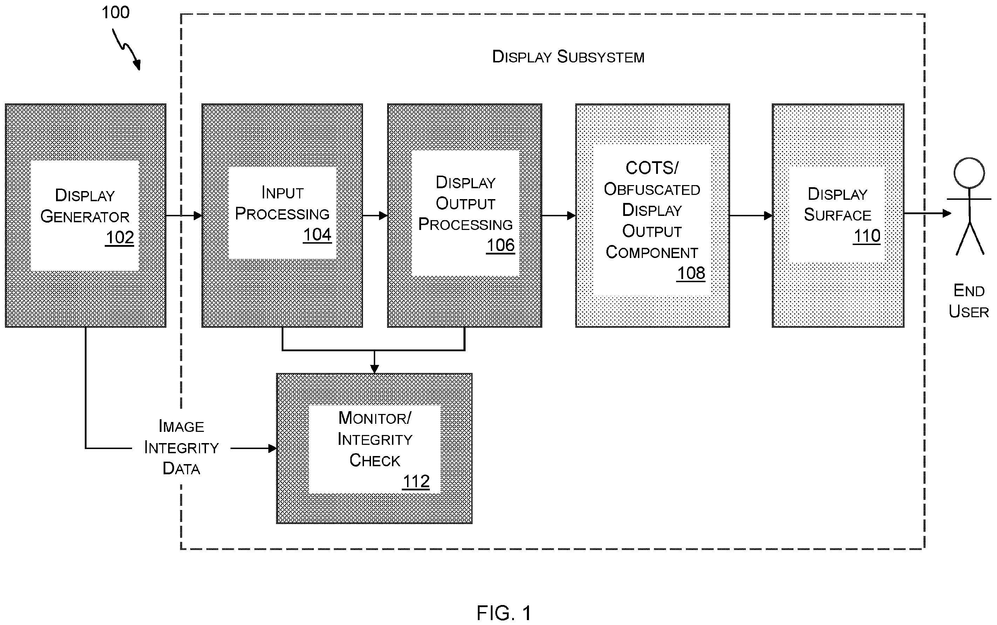

Figure 1 shows a schematic diagram of operation of an example of a display system 100. The display system 100 comprises two parts. A first part of the display system 100 has a high design assurance level (DAL). The high DAL relates to a component or process that can be controlled and assessed for integrity so that safety is not compromised. Safety and integrity of display output may be considered to be compromised when an error or a fault has been detected. The error and fault may cause misinformation by display misleading or incorrect information for display. A second part of the display system 100 has a low design assurance level (DAL). Comparative to the high DAL, the low DAL relates to a component or process which is only controllable with significant limitations or not controllable at all. The first part of the display system 100 comprises a display generator 102, input processing component 104, display output processing component 106 forming a part of display generation path. The display system 100 comprises a display generator 102 configured to generate display output. The display output is generated based on data gathered from different systems of the vehicle. For example, in an aircraft, the data may be gathered from a flight control system via a data bus. In a land-based vehicle, the data may be gathered from a driving assistance system. The display output is sent for input processing 104 and then display output processing 106. The output after these processing steps is then compared against the display output from the display generator 102 for integrity check 112. The integrity of the display output is monitored and/or checked at 112. This check provides means to maintain the high DAL. An image integrity check is performed to detect display output data integrity by at least checking occurrence of any error during transmission or storage of the display output. The image integrity check may comprise calculating a checksum. This first part of the display generation path of the display system 100 is customisable and its operation is transparent. The display output is monitored, and integrity is checked up-to this display image generation path from 102 to 106 of generating display output for display. The second part of the display generation path of the display system 100 relates to a commercial-off-the-shelf (COTS) device or obfuscated display output component 108 and a display surface 110 of a display device. The display system 100 comprises a commercial-off-the-shelf (COTS) device or obfuscated display output component 108 to deliver the display output for a user interaction. The display system 100 comprises a display surface 110 to realise the display output. The display output comprises one or more objects. The objects may be augmented reality (AR) objects. The AR objects may comprise a vehicle's operational information, such as speed, altitude, vehicle orientation. The AR objects may comprise flight reference symbology and/or flight reference information. The AR objects may be alphanumeric or graphical representation. The AR objects may be projected on to a display.

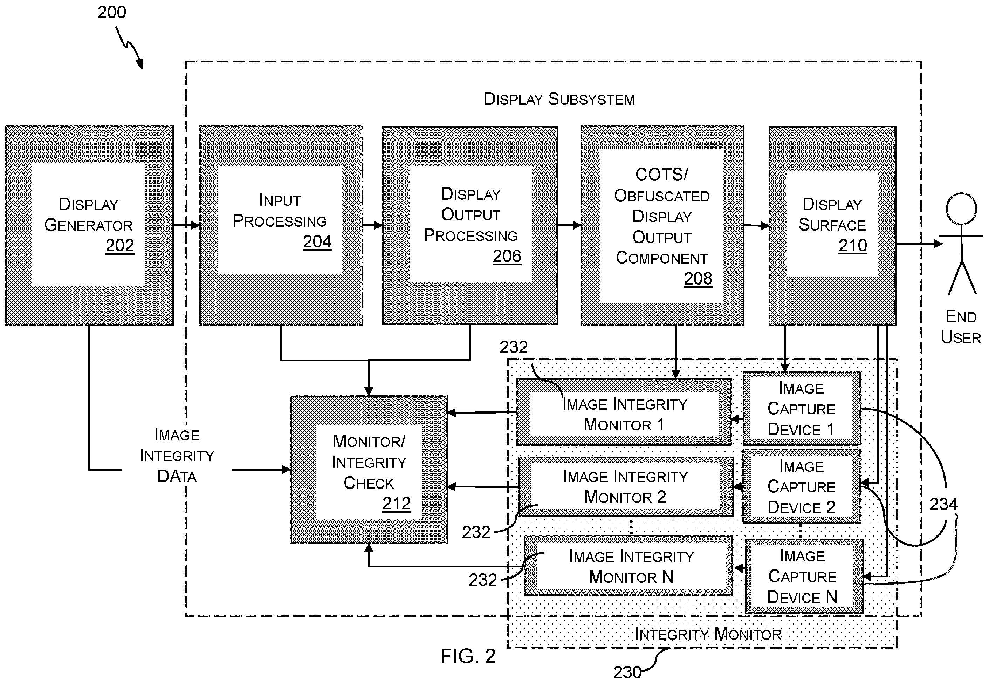

Figures 2 to 3 illustrate a display system for monitoring integrity of display output of a display system 200, 300 for a vehicle. Figure 2 shows a schematic diagram of operation of an example of a display system 200 with an integrity monitor 230. The display system 200 comprises corresponding features of the display system 100 shown in Figure 1. The display generation path of the display system 100 and components/processes as described above in relation to Figure 1 applies to the corresponding parts of the display system 200 of Figure 2. The display system 200 is configured to receive or generate data from a display generator 202, perform input processing 204, perform display output processing 206, interact with COTS or obfuscated display output component 208, output the display output to the display surface 210 and monitor integrity of the data at check point 212 as the display system 100. In addition, the display system 200 comprises an integrity monitor 230. The display system 200 is configured to monitor integrity of the display output via the integrity monitor 230.

The display system 200 effectively provides two monitoring and/or integrity check points. A first monitoring and/or integrity check is performed using image integrity data at monitor/integrity check point 212. The image monitor/integrity check at point 212 may comprise calculating a checksum. A second monitoring and/or integrity check is performed with the integrity monitor 230. The second integrity check ensures that the integrity of display output data for the second part of the display generation path of the display system 200, wherein the second part of the display generation path comprises components which are integrated with the rest of the display system. Determination of the integrity of the display output at the point closest to when it is being displayed is desirable as the image on the display surface 210 need to have a high DAL. The integrity monitor 230 may comprise an image integrity monitor 232. In some examples, the image integrity monitor 232 comprises an artificial intelligence (AI) monitor 232. The AI monitor comprises a machine learning (ML) model. The ML model may comprise a neural network (NN) optimised for computer vision. For example, the ML model may comprise a convolutional neural network (CNN). The ML model may comprise a neural network trained for image classification and object detection. For example, the ML may comprise a region-based convolutional neural network (R-CNN). The ML model may comprise a neural network trained for image classification. For example, the ML model may comprise a recurrent neural network (RNN). The ML model may comprise a neural network trained for faster image classification. For example, the ML model may comprise You Only Look Once (YOLO). The ML model performs classification and prediction of the objects identified by the display system 200. The display system 200 comprises at least one artificial intelligence (AI) monitor 232 and at least one image capture device 234. The integrity monitor 230 comprises at least one image integrity monitors 232. The integrity monitor may comprise a plurality of image integrity monitors 232. In some examples, the image integrity monitor 232 comprises an Optical Character Recognition (OCR) component.

The display system 200 is configured to receive an image of the display output from the at least one image capture device 234. The at least one image capture device 234 may be a camera. The display system 200 is configured to identify a symbology in the image. The symbology is a part of the AR object. The symbology may be alphanumeric or graphical representation.

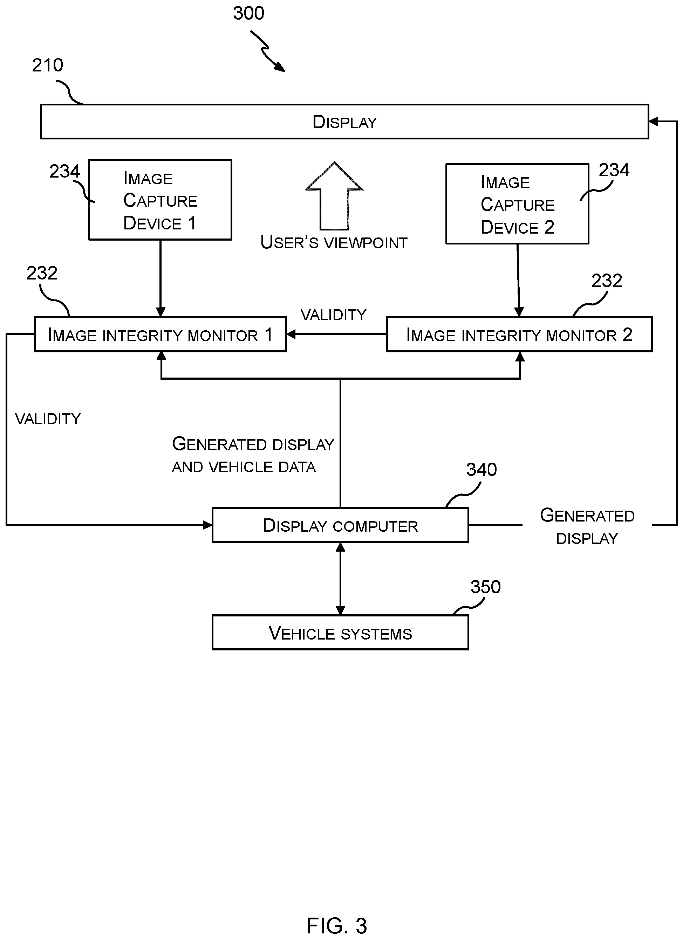

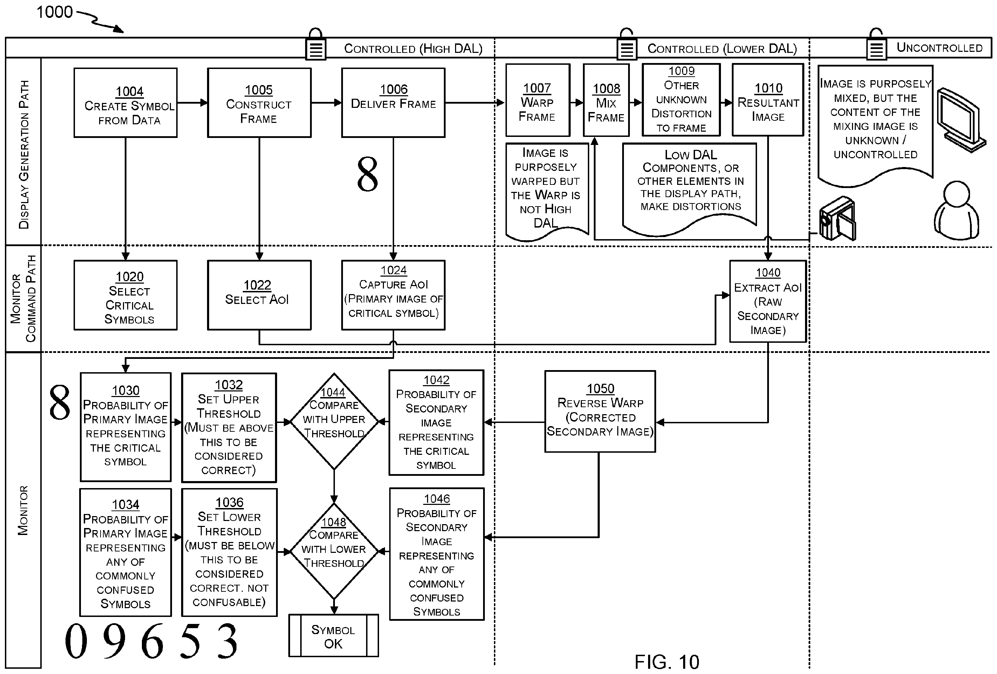

In some examples, the display system 200 is configured to determine integrity of the image based on at least three dissimilar ML models. The integrity monitor 230 comprises three AI monitors 232. The three AI monitor 232 each comprises ML models that are different from each other. The ML model is configured to receive data relates to vehicle operations (e.g., vehicle data of Figure 3) then train to identify the AR object (e.g., the symbology). The ML model is configured to determine the appearance of the AR object such as but not limited to size, font type, object type, colour, style. In some examples, the ML model is further configured to receive vehicle data from the vehicle data bus and compare the value of the vehicle data with the value of the AR object. Further examples of the operation of ML model relating to the classification of the symbology in the image is described in relation to Figures 10 to 12.

The ML model is trained with dataset extracted from video feed of actual flight or journey taken by the vehicle. The dataset may comprise a single image frame and/or contiguous image frames. The image frames may comprise annotations. Each of the frame may comprise an AR object. The AR object may be static or moving. The ML model may be trained with predesigned symbology sets. The ML model is trained with the dataset to recognise and also determine value of the AR object of the image based on the display output.

The display system 200 is configured to calculate a respective confidence value for the image and identify a respective tolerance threshold by each of the at least three dissimilar machine learning models. Each of the three dissimilar machine learning models determines whether the integrity of the image is compromised based on the respective confidence value and the respective tolerance threshold. The display system 200 is configured to determine a consensus on the integrity of the image based on the resultant value of the at least three dissimilar machine learning models. For example, the display system 200 comprises a first ML model, a second ML model and a third ML model. The first ML model calculates a first confidence value for the image and identifies a first tolerance threshold. The first ML determines whether the integrity of the image is compromised based on the first confidence value and the first tolerance threshold. The second ML model calculates a second confidence value for the image identifies a second tolerance threshold. The second ML determines whether the integrity of the image is compromised based on the second confidence value and the second tolerance threshold. The third ML model calculates a third confidence value for the image and identifies a third tolerance threshold. The third ML determines whether the integrity of the image is compromised based on the third confidence value and the third tolerance threshold. In response to the respective confidence value calculated for the AR object of the image not overcoming the identified respective tolerance threshold, the ML model is configured to determine that the integrity of the image is compromised. The display system 200 is configured to determine a consensus on the integrity of the image based on the determination of integrity by the first, second and third ML models. The consensus can be determined by voting of each of the ML models. For example, the first ML model and the second ML model may find the integrity is at low DAL as the integrity of the image is compromised. The first confidence value has not overcome the first tolerance threshold, and the second confidence value has not overcome the second tolerance threshold. The third ML model may find the integrity is acceptable, high DAL. The third confidence value overcame the third tolerance threshold. The first ML model and the second ML model flag up integrity breach and the third ML model does not. Then as the majority of the ML models has voted that the integrity is compromised, the integrity monitor 230 determines that the integrity of the image is compromised. The first, second and third ML model are different from each other. The first model may be CNNs. The second model may be RNN. The third model may be R-CNN. In some examples, the model can be of the same type, such as CNN, but have different layers and structures. The display system 200 may comprise different number of ML models. The more ML models the system 200 uses the accuracy of the integrity check increase. To structure accurate but efficient computation for the monitoring and/or integrity check, the display system 200 may comprise three ML models. To simplify voting decision the number of ML models used may be an odd number. Figure 2 shows that there may be one or more image integrity monitors, illustrated as image integrity monitor 1 to image integrity monitor N.

The display system 200 is configured to receive the image from an image capture device system. In some examples, the image capture device system comprises at least two image capture devices 234. Each of the at least two image capture devices captures the image of the display output on the display surface 210. In some examples, the image capture devices 234 of the image capture device system may be dissimilar to each other. For example, they are deliberately selected to be from different manufacturer or different version to mitigate the same kind of error caused by the image capture devices 234. The image capture device system is oriented to capture the display from the user's perspective, as can be seen in Figure 3. For example, the image capture device system may comprise at least two image capture devices and each of the at least two image capture devices capture the image of the display output being displayed on the display surface 210. The at least one image capture device 234 may be a camera. The at least two image capture devices 234 may be a camera.

In some examples, the number of image capture devices is determined by the number of ML models being used by the display system 200. The display system 200 may use the received images from the image capture devices depending on the number of image capture devices and the number of dissimilar ML models available. For example, the display system 200 may comprise three dissimilar ML models 232 of the integrity monitor 230 and the image capture device system comprises three image capture devices 234. A first image capture device is configured to capture a first image of the display output. A second image capture device is configured to capture a second image of the display output. A third image capture device is configured to capture a third image of the display output. The first, second and third images differ. The first, second and third image capture device are positioned in different locations. In such case, the display system 200 is configured to receive the first image, the second image and the third image. The display 200 is then configured to provide the first image to the first ML model, the second image to the second ML model and the third image to the third ML model. The first image capture device is associated with the first ML model. The second image capture device is associated with the second ML model. The third image capture device is associated with the third ML model. If the first image capture device fails, then the second image from the second image capture device or the third image from the third image capture device may be provided to the first ML model instead. In this way, an error in the image capture device system can be compensated when monitoring integrity of the display output. In some examples, each of the first, second and third image capture devices is a camera.

In another example, the display system 200 may comprise three dissimilar ML models and the image capture device system comprises two image capture devices. A first image capture device is configured to capture a first image of the display output. A second image capture device is configured to capture a second image of the display output. The first image and the second image differ. The first and the second image capture device are positioned in different locations. In such case, the display system 200 is configured to receive the first image and the second image. The display system 200 is then configured to provide the first image to two of the three dissimilar ML models 232 of the integrity monitor 230 and provide the second image to one of the three dissimilar ML models 232 of the integrity monitor 230.

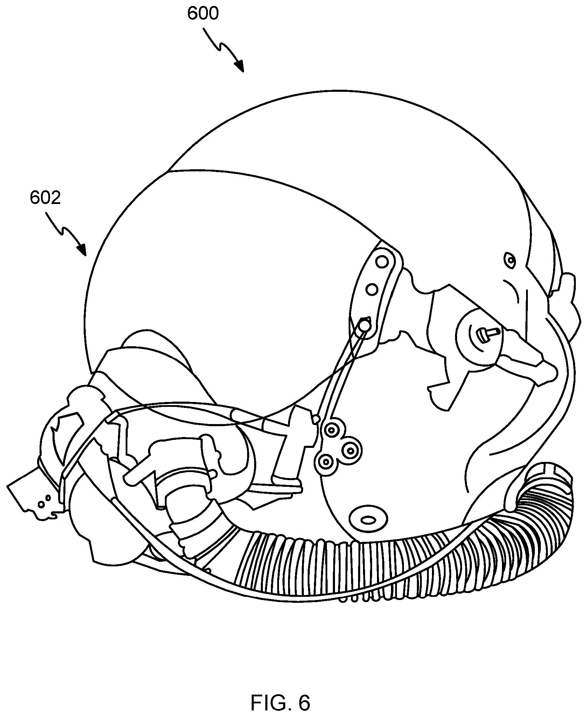

The image capture devices 234 of the image capture device system are orientated in such way so that the image capture devices 234 capture the image of the display surface 210 which includes background, such as outside view, and the objects (e.g., symbology). In some examples, the image capture device system is mounted on a head wearable device and/or a cabin of a vehicle. The head wearable device may be a helmet as shown in Figure 6, or AR glasses (not shown). The image capture devices 234 may be located on the head-wearable device as close to the position of the user's eye. The image capture devices 234 may be located on either side of the user's head. For example, but not limited to, the first image capture device may be located in the proximity of the user's left eye when the head wearable device is worn and the second image capture device may be located in the proximity of the user's right eye when the head wearable device is worn. The third image capture device may be in the proximity of the centre of user's temple when the head wearable device is worn. The position of the image capture devices will depend on the display device being used with the vehicle and depend on the structure of the integrity monitor 230. Figure 2 shows that there may be one or more image capture devices, illustrated as image capture device 1 to image capture device N.

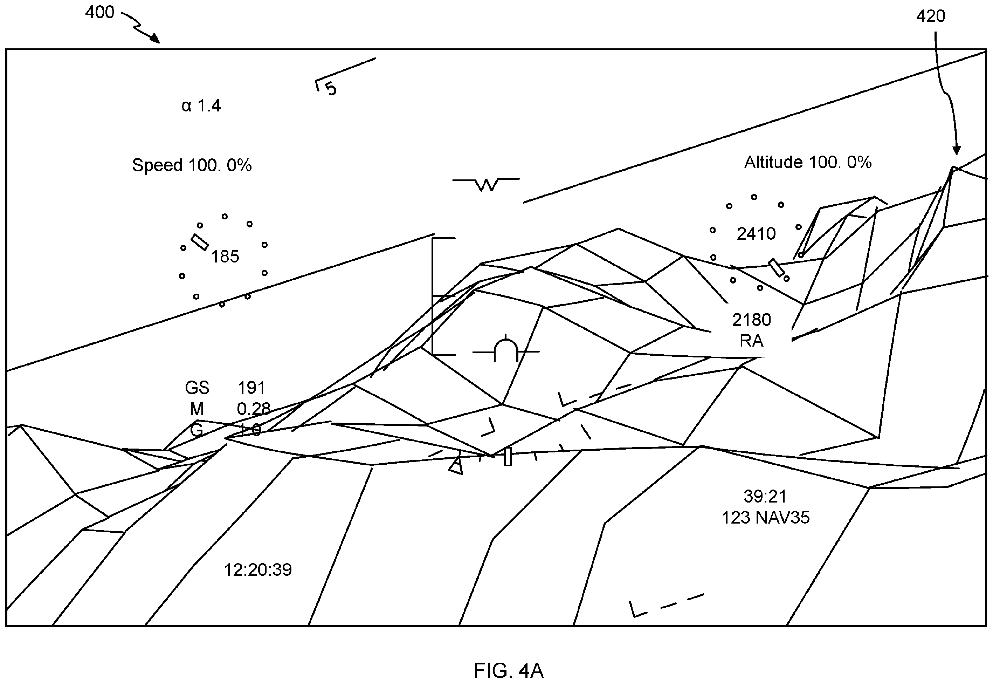

In some examples, the display system 200 is configured to generate a static background for the display. The static background is configured to blocks out outside views such as sky, landscape, horizon etc. These outside views can interfere with recognising the AR objects in the image generated from the display output. Figure 4A is an example of captured image 400 of the display output by the image capture device 234. In this example, the background outside view 420 has not been blanked out. The static background is created to generate more accurate image data for the AR object (i.e., symbology) so that the AR object can be processed to determine integrity of the image. Recognition of an individual symbol used for the AR objects is further described in relation to Figures 10 to 12.

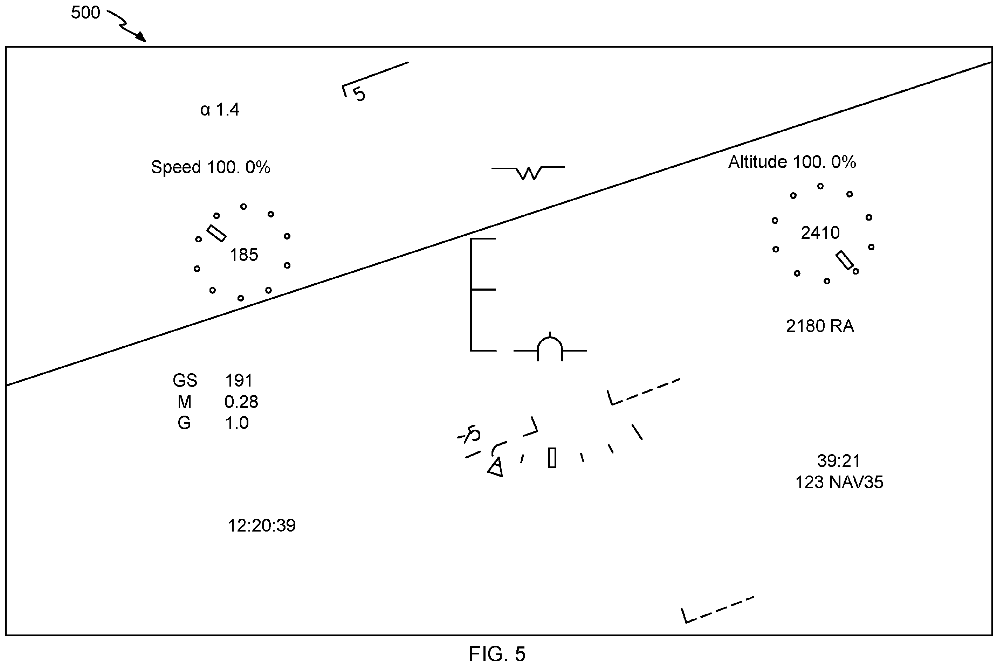

Figure 5 shows an example of captured image 500 of the display output by the image capture device 234. In this example, the background (outside view) has been blanked out with a static background. The static background comprises a uniform colour. In some examples, the uniformed, static background may be provided by an electrochromic tinting system. A visor 602 of the head wearable device 600 may provide such an electrochromic layer. The display system 200 is configured to generate the static background for a duration of predetermined period. The predetermined period may be less than or equal to 500 microseconds. This will ensure that the change made to the display surface 210 caused by displaying the static background is unobserved by the user due to the physiology of human eyes. Also, the resulting image captured is better quality input for the ML models to process and train with.

In some examples, the display system 200 is configured to capture the image of the display output with the image capture device system in synchronisation with the generation of the static background. By using the generated background and capturing image of the display output simultaneously, selection is made to deliver only the best possible image data for the identification of the symbology in the image. This in turn increases the accuracy of the ML models in determining whether the integrity of the image is compromised or not. The image capture device system is configured to capture the image based on the display output when displayed on the display surface 210 at a predetermined interval. The predetermined interval is determined based on the vehicle design and need for a safety critical system. For example, the image may be taken once every second, every five seconds or every ten seconds. To achieve a higher safety level the predetermined interval will be shorter.

In some examples, the display system 200 is configured to compare the symbology value with a data value from data bus of the vehicle. The display generator 202 is configured to receive all the data relating to the operation of the vehicle (e.g., vehicle data in Figure 3) via the data bus of the vehicle and draw a symbology based on the information gather from the vehicle systems 350 shown in Figure 3. The receive data relating to the operation of the vehicle is processed at the input processing component 204 and outputted as display output by the output processing component 206 and checked against data value received from the data bus by monitor/integrity check component 212. These components may represent processing threads. The display computer 340 shown in Figure 3 is configured to process these threads.

The display system 200 is configured to determine integrity of the image. In response to determining that the integrity of the image is compromised, the display system 200 is configured to perform one or more remedial actions. The one or more remedial actions comprise displaying a blank screen, logging an error, outputting a warning signal, initiating soft restart of the display system, and initiating soft restart of the head wearable device. The remedial actions described in relation to Figures 10 to 12 may also be performed. By displaying a blank screen on the display surface 210, the user will get a clear message that something is not quite right with the display system and the display information cannot be rely on. By logging an error, the problem of the display system may be analysed and fixed during the maintenance of the vehicle. A log for the vehicle may log the error and/or a log for the display system 200 may log the error. The display computer 340 shown in Figure 3 comprises a built-in non-volatile memory in which the logger can be saved. By outputting a warning signal, such as but not limited to lighting up dashboard, the user becomes aware of the error in the displayed image of the display output and may seek the relevant information elsewhere, such as a dashboard.

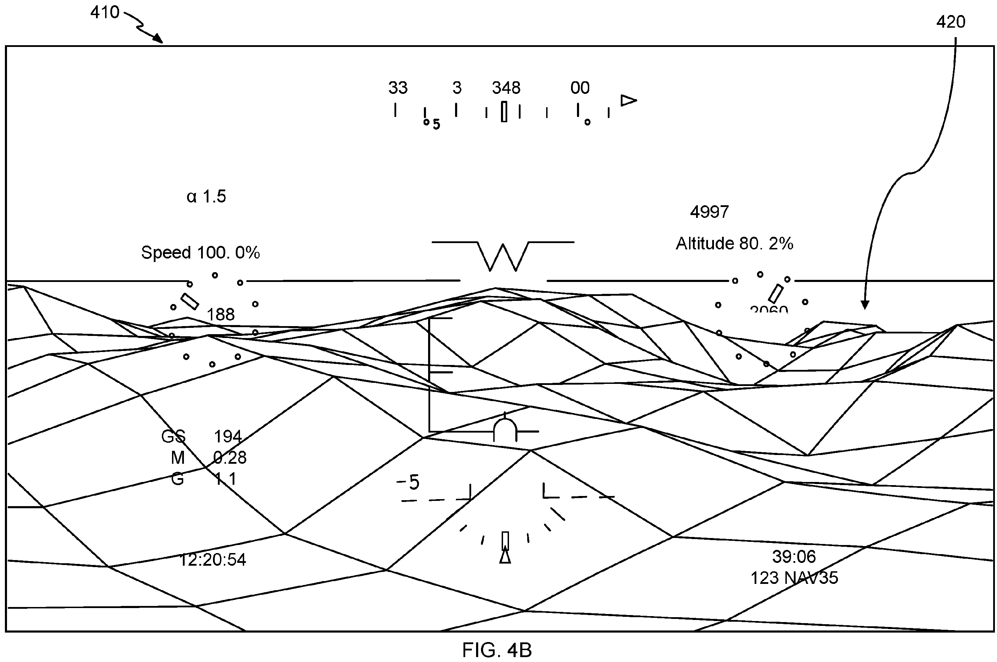

In some examples, the display system 200 comprise a counter. The counter keeps the number of times a fault has been identified. In a way the counter maintains a historical data of occurrence of faults. The display system 200 may be configured to determine that there is a critical failure if there are three successive faults. The counter value may be three in this case. The display system 200 may be configured to determine that it is an instantaneous fault, if, for example but not limited to, the occurrences of every fault being followed by two good instances. In some examples, the counter can be operated so that every time there is a fault the counter goes up by three, and when there is a good instance then the counter goes down by one. Then display system 200 is configured to compare the counter value with a predetermined threshold value to determine a failure. Each time a fault has been registered the display system 200 is configured to log the fault. The predetermined threshold value may depend on the design of the display system and/or by the design of the vehicle. The display system 200 may be configured to determine intermittent faults. In response to determining the intermittent fault, the display system 200 initiates a critical mode. The critical mode may change the operation of the display system 200 to accommodate a potential critical failure. Figure 4B is an example of captured image 420 of the display output by the image capture device 234. In this example, some parts of the AR object have not been generated properly, possibly due to an error of the display device. In such case, the display system 200 is configured to determine that the integrity of the image is compromised because the symbology of the image (display output) cannot be identified, and the AR object can be misleading.

Figure 3 shows an example schematic diagram of a system 300 for monitoring integrity of display output. The components shown in Figure 3 that correspond to the components shown in Figure 2 are labelled with same reference numerals. The system 300 is configured to receive any vehicle operational data (e.g., vehicle data) from vehicle systems 350, such as a flight control system, a navigation system.

In some examples, a display computer 340 is configured to perform the display generation path as shown in Figure 2, in particular, the display generation path from steps 202 to 206. The display computer 340 may comprise the display generator 202. The display generator 202 is configured to generate an AR object based on the vehicle data. The display computer 340 is configured to cause the display output to be displayed on the display surface 210 of a display device. The display computer 340 is also configured to transmit the vehicle data and the display output to an image integrity monitor 232. In some examples, the image integrity monitor 232 comprises an AI monitor. The AI monitor may comprise a ML model. In this way the vehicle data and the display output can be input to a ML model for classification and prediction of the AR object of the display output. Both recognition of the AR object and verification of the value of the AR object may be determined using the ML model. The first image integrity monitor 232 validates the AR object of the image captures by the first image capture device 234. The second image integrity monitor 232 validates the AR object of the image captures by the second image capture device 234. The second image integrity monitor 232 may be used to check validity of the output of the first image integrity monitor 232. Although not illustrated in Figure 3, the system 300 may comprise one or more image integrity monitor 232 (1 to N) as illustrated in Figure 2. Alternatively, or additionally, the system 300 may have one or more image capture device 234 (1 to N) as illustrated in Figure 2. In such cases, each of the image integrity monitor 232 operates to validates the AR object of the image captures by their associated image capture device 234. Each of the image integrity monitor 232 may check validity of the output of another image integrity monitor 232 in the system.

In some examples, the image integrity monitor 232 may comprises at least one OCR component. The system 300 for monitoring integrity of display output comprises at least one image integrity monitor 232. The system 300 for monitoring integrity of display output may comprises a plurality of image integrity monitors 232. The system 300 for monitoring integrity of display output may comprises at least one AI monitor 232. The system 300 for monitoring integrity of display output may comprises a plurality of AI monitors 232.In some examples, the display computer 340 is configured to cause an interrupt to the components of the display image generation path to switch on an electrochromic tint system. The operation of the display system 200 is interrupted to take a snapshot of the image generated from the display output displayed on the display surface 210 of a display device. The display computer 340 may comprise a timer. The display computer 340 is configured to operate the timer to cause the capturing of the image by the image capture devices 234 at the predetermined intervals.

Figure 6 shows an example of a display device. The display device comprises a head wearable display device 600 such as but not limited to a helmet for a pilot. The head wearable display device 600 is configured to communicate with the display computer 340. The display system 200 may comprise the head wearable display device 600 and the display computer 340. In some examples, the head wearable display device 600 comprises the display system 200. The head wearable display device 600 comprises a movable visor 602. The visor 602 can be pulled down to cover the field of view of the user. The visor 602 comprises an electrochromic tint layer. As an example, the image capture device 234 of the image capture device system described herein is located at the temple area of the user and pointed to the display surface 210. The display surface 210 is a part of the head wearable device 600. The display surface 210 may form inside the visor 602. The display output is be projected to the display surface 210. The head wearable device 600 is configured to perform the steps of the methods described herein. The head wearable device 600 is configured to comprise the systems described herein.

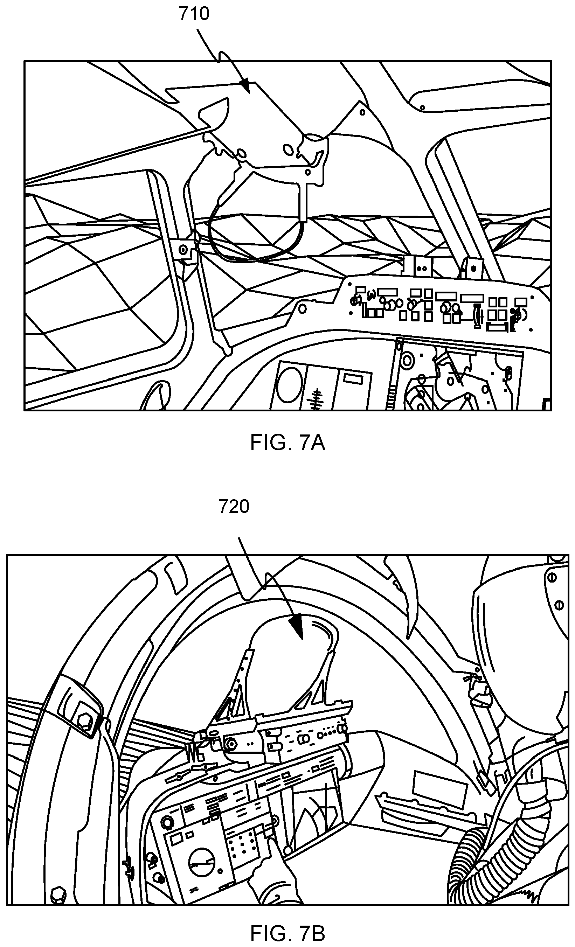

Figure 7A-B show examples of a display device. The display device comprises a head up display (HUD) device 710, 720. The HUD device 710, 720 is configured to communicate with the display computer 340. The display system 200 may comprise the HUD device 710, 720 and the display computer 340. In some examples, the HUD device 710, 720 comprises the display system 200. The HUD device 710, 720 comprises an electrochromic tint layer. In such examples, the image capture devices 234 of the image capture device system described herein may be located on the head wearable device of the user or in the cabin. The display surface 210 is a part of the HUD device 710, 720. The HUD device 710 may be mounted on the ceiling of the cabin. The HUD device720 may be mounted on a dashboard of the vehicle. The display output may be projected to the display surface 210. The HUD device 710, 720 is configured to perform the steps of the methods described herein.

The display surface 210 of the display device 600, 710, 720 may be located between the user's eye and the electrochromic tint layer of the display device 600, 710, 720. The electrochromic tint layer of the display device 600, 710, 720 can be engaged or disengaged during the operation of the vehicle. The engagement and disengagement of the tint layer may be determined by the display system 200.

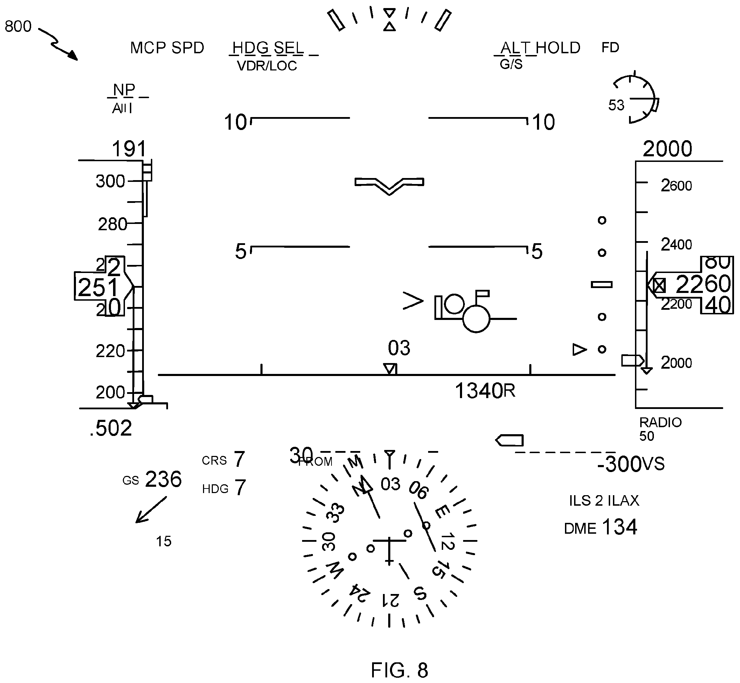

Figure 8 shows an example of symbology displayed for the user on an aircraft. The display output comprises AR objects data. An image 800 is generated from the display output. The image may be a resultant image of the display generation path of the display systems 200, 1000 described in Figures 2 and 10. The display output is outputted to the display surface 210. The AR objects of the display output is displayed on the display surface 210. The AR objects may be projected on the display surface 210. The image 800 of the displayed, resultant display output may be captured by the image capture device system. The captured image 800 may comprise the AR objects of the display output. The AR objects comprise symbology. The symbology may comprise vehicle operational information. The image 800 is an example and the symbology that can appear on the display surface 210 is not limited to the symbology shown in image 800. Depending on the design of the vehicle and its systems the symbology for display will be selected.

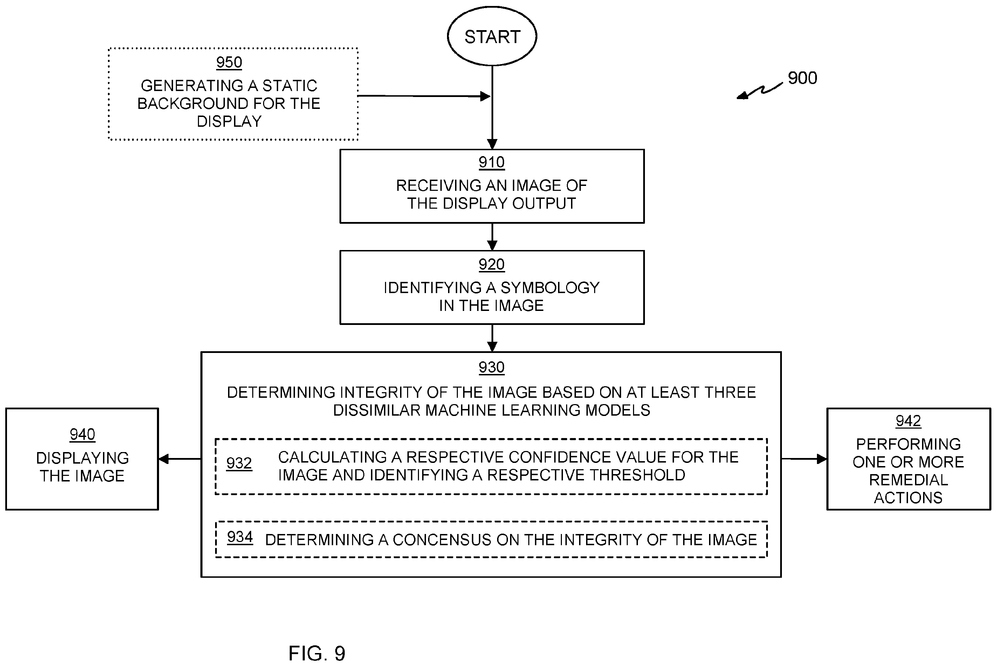

Figure 9 shows an example method for monitoring display output. The method 900 performs monitoring integrity of display output of a display system for a vehicle. At step 910, an image of the display output is received. At step 920, an AR object, such as a symbology, in the image is identified. At step 930, integrity of the image is determined based on at least three dissimilar machine learning (ML) models. Three different machine learning models have been used to provide more accurate determination of the correctness of symbology being displayed.

In some examples, although not shown in Figure 9, a result in response to the determination of the integrity of the image based on the at least three dissimilar ML models is stored. The stored result comprises one or more associated confidence value. The stored result is stored for the maintenance purpose and for use as training data for the ML models of the system.

In some examples, the method comprises receiving the image from an image capture device system wherein the image capture device system is oriented to capture the display from the user's perspective. The image capture device system may comprise at least two image capture devices and each of the at least two image capture devices capture the image of the display output. The image capture device system may be mounted on a head wearable device or a cabin of the vehicle. The number of image capture devices corresponds to the number of ML models used by the integrity monitor 230.

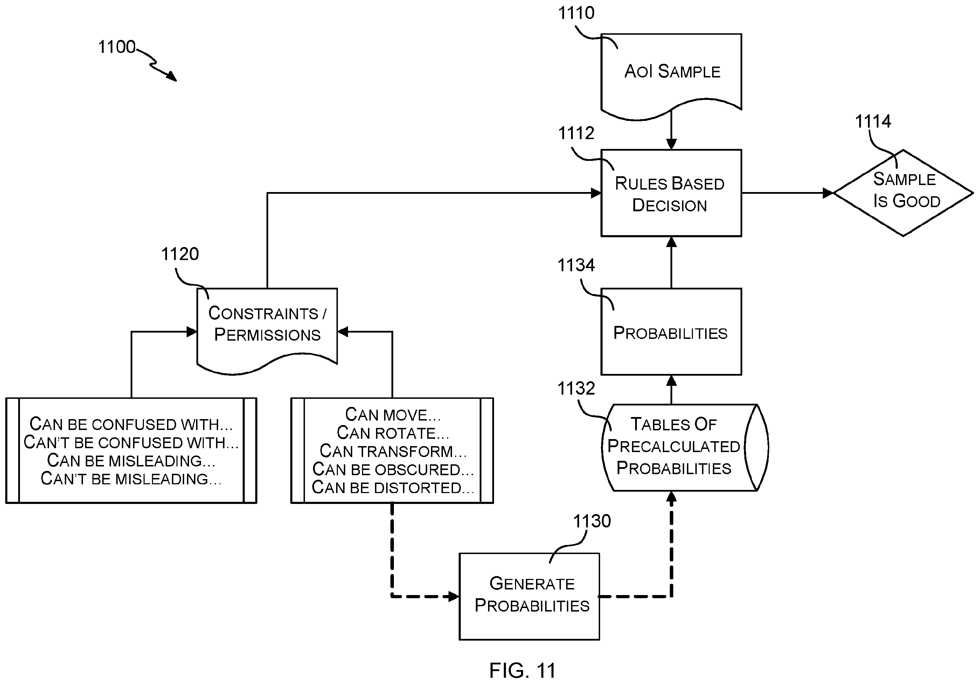

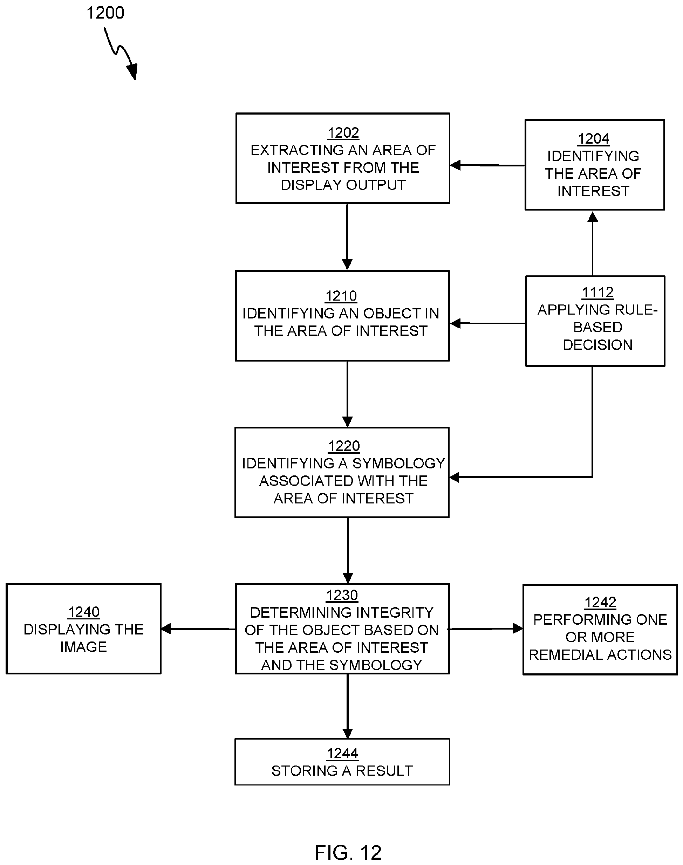

In some examples, the method comprises a step 932 for calculating a confidence value for the image and identifying a tolerance threshold. Each of the at least three dissimilar machine learning models performs the steps 932. Each of the three dissimilar machine learning models determines whether the integrity of the image is compromised based on the respective confidence value and the respective tolerance threshold. At step 934, a consensus on the integrity of the image amongst the at least three ML models is determined. Each of the ML models independently calculates a confidence value of the symbology associated with the image received and identifies its own tolerance threshold. For example, in the case of receiving the image 400 of Figure 4A, the confidence value of the symbology associated with the image received may be 100 % for both speed is 185 and altitude is 2410. In contrast, the image 410 of Figure 4B, even though the confidence value of the symbology associated with the image received may be 100 % for the speed 188, the confidence value of the symbology associated with the image received may be less than 100 % (e.g., 80.2%) as the symbology for the altitude had error when being displayed. The confidence values which are in percentage along with a label for the relevant vehicle data are shown in Figures 4A, 4B and 5 as illustration purpose. In some examples of the implementation of the system, the confidence values and the label may not be presented to the user, in particular, during the flight. The user may have option to have the actual confidence value and the label displayed or not displayed during the operation of the vehicle or during maintenance of the vehicle. Without a full view of the symbology the confidence value decreases. In some examples, the symbology may not be correctly viewable by the image capture device 234 due to the position of the image capture device and noise in the display output, due to interference with light or interference with background images. In such case, similar to the image 410 of Figure 4B the information captured by the image capture devices 234 is limited. The confidence value of the symbology associated with the image received decreases. An example of the identification of the confidence value of the symbology is described in relation to Figures 10 and 11. The method 900 of Figure 9 may further comprise the steps of method 1200 in Figure 12. In some examples, the symbology value is compared with a data value from data bus of the vehicle to determine integrity of the image. In some examples, the method comprises a step of updating counter based on determination of the integrity of the image.

In some examples, the method comprises a step of providing a first image by a first image capture device to a first machine learning model of the at least three machine learning models. The method comprises a step of providing a second image by a second image capture device to a second machine learning model of the at least three machine learning models. The method comprises a step of providing a third image by a third image capture device to a third machine learning model of the at least three machine learning models.

In some examples, the method comprises a step 950 generating a static background for the display. In such case, an image comprising static background is received at step 910. The method comprises a step of capturing an image in synchronisation with the generation of the static background. The static background may comprise uniform colour. The image capture devices 234 is configured to capture the image at the same time as when the display system 200 generates and flashes a static background. In some examples, the static background is provided by an electrochromic tinting system. In some examples, the static background is generated at a predetermined interval.

In some examples, the method comprises a step 940 of displaying the image when the integrity of the display output meets the standard required. In some examples, the method comprises a step 942 of performing one or more remedial actions, in response to determining integrity of the image and/or symbology is compromised. For the one or more remedial actions the method may comprise one or more steps of: displaying a blank screen; outputting a warning signal, initiating soft restart of the display system, and initiating soft restart of the head wearable device.

Figure 10 shows a system for monitoring integrity of display output of a display system for a vehicle. The system 1000 comprises a display generation path. The system 1000 is configured to create an object, such as but not limited to a symbol, from received data. The data may be received from a display computer 340 as described in Figure 3. The system 1000 may be a part of the system 200. The system 1000 is configured to construct a frame based on the received data. The constructed frame comprises the object. The object may be AR object. The system 1000 is configured to deliver the frame to the display device 600, 710, 720. The display generation path comprises processing components 1004, 1005, 1006 which correspond to the processing components 204 and 206 of the display generation path of the display system 200 of Figure 2. The display generation path comprising processing components 1004 to 1006 occurs within the system that is visible and controllable. This first part of the path has a high DAL. The frame generated from the display output is displayed on display surface 210 as a resultant image 1010. Between receiving the frame and resultant image 1010 being displayed, there may be different influences on the frame (e.g., the display output) that may degrade the quality of the frame. Examples of potential causes of degradation may be warping of a frame 1007, mixing of frame 1008, other unknown distortion to the frame 1009 which are represented as processing components of the display generation path of system 1000. Although the three causes are illustrated in a second part of the display generation path of system 1000, depending on the system structure and situation the number of potential causes may vary. Mixing background feed of the outside view to the frame may cause fault reading of the object (e.g., symbology) in the frame. If degradation affects the resultant image, then the system 1000 may be configured to compensate for the degradation. For example, if the frame has been unexpectedly wrapped then the system may reverse the wrapping of the frame to process the image for monitoring and/or integrity check. In some cases, the warping 1007, mixing 1008 and other distortion 1009 may occur visibility, by design within a controllable environment. In such case the degradation is controlled. For example, warping of the frame 1007 may be deliberate to provide an image that is adapted to the shape of the display, such as but not limited to the curvature of the visor 602 of the head wearable device 600. In such case, the system 1000 may recognise the object of the resultant image frame without the need to reverse the warping of the frame. The ML model of the system 1000 may be trained on warped images.

The system 1000 is configured to extract an area of interest from the display output 1040. Determination of the integrity of the display output at the point closest to when it is being displayed is desirable as the image on the display surface 210 need to have a high DAL. In some examples, the system is configured to apply at least one rule-based criterion to identify the area of interest for extraction. The area of interest may be related to critical information of the vehicle such as speed and altitude. The system 1000 may be configured to select area of interest 1022 from the constructed frame 1005. The system 1000 is configured to identify an object in the area of interest. In some examples, the system is configured to apply at least one rule-based criterion to identify the object in the area of interest. The system 1000 is configured to identify a symbology associated with the area of interest. In some examples, the system is configured to apply at least one rule-based criterion to identify the symbology associated with the area of interest. The system 1000 is configured to select critical symbols 1020 from the vehicle data as it generates the symbols 1004.

A particular vehicle may provide a particular style of display output to be formed on the display surface 210. As can be seen in the images 400, 800 of the display output of Figures 4A and 8 different layouts and different information may be used by different aircrafts. The system 1000 is already aware of area of interest in relation to information the system 1000 provides. For example, a symbology relating to speed may be displayed on the left-hand side and a symbology related altitude information may be displayed on the right-hand side. The system 1000 can determine the area of interest and the object recognised in the frame using this design rules. Once the area of interest has been identified the symbology expected to be within the area of interest may also be identified according to the rule based on the design of the vehicle system.

The system 1000 is configured to determine integrity of the object based on the area of interest and the symbology. In some examples, the system is configured to perform optical character recognition (OCR) and/or apply at least one machine learning (ML) model for identifying the object in the area of interest. The system is capable of using both OCR and ML models depending on the complex of the display output.

In some examples, the system is configured to determine probability for the area of interest comprising an expected symbology 1030, 1042. Then, the system 1000 may be configured to compare the determined probability of the area of interest comprising the expected symbology with a predetermined upper threshold 1044. Additionally, or alternatively, the system is configured to determine probability for the area of interest comprising a similar symbology 1034, 1046. Then, the system 1000 may be configured to compare the determined probability of the area of interest comprising the similar symbology with a predetermined lower threshold 1048. The similar symbology refers to the symbology which is commonly confusable with the object associated with the area of interest. For example, if the object is number '8' then the object may be confused with numbers such as '0', '9', '6', '5', '3'.

The probabilities (such as but not limited to the probability for the area of interest comprising an expected symbology probability for the area of interest comprising a similar symbology) may be calculated using the at least one ML model. Different probabilities that may be calculated using the at least one ML are described in Figure 11. In some examples, the at least one ML model may be the ML models described herein, in particular, in relation to Figure 2. In some examples, the image integrity monitor 232 is configured to calculate the probabilities. In some examples, the system comprises an image integrity monitor 232 which is configured to perform OCR. Additionally, or alternatively, the system comprises an image integrity monitor 232 which is configured to perform ML using ML models.

In some examples, the extracted area of interest 1040 may be processed to reverse some of the known degradation caused during the process of generating the display output. A processed image of the extracted area of interest is generated 1050. The system may apply reverse warp to the extracted area of interest image if the frame had been warped at the second part of the display generation path (e.g., warp frame component 1007) which has a low DAL. The system may remove background or apply static background of the extracted area of interest image. In this way, the system 1000 is configured to obtain a processed image of the area of interest from a raw image of the area of interest generated by extraction 1040. The raw image of the area of interest may refer as a raw secondary image. The processed image may refer as a processed secondary image. The processed (e.g., corrected or simulated or both) image of area of interest is used to determine probabilities such as but not limited to the probability for the area of interest comprising an expected symbology probability for the area of interest comprising a similar symbology at components 1042 and 1046. In some examples, the probability of the processed secondary image presenting critical symbols or the probability of the processed secondary image representing any of commonly confused symbols or both may be determined. The raw and processed secondary images are assumed to be imperfect in some ways as they have been transformed by lower DAL processes or have been resulted in containing data that cannot be entirely anticipated. For example, the image of the real world in the moment the secondary images have been captured cannot be anticipated.

In some examples, the system 1000 is configured to capture a primary image of the area of interest 1024 comprising a symbol from the frame being delivered at 1006 to the display device. The system 1000 comprises a frame buffer. The frame delivered at 1006 are stored in the frame buffer. The primary image of the area of interest is captured 1024, from a frame buffer associated with 1006. Both components 1006, 1024 of the system have high integrity. As both components are within the first part of the display generation path which comprises a controlled, high DAL, the primary image of the area of interest may be transferred, using an internal data bus, directly from the display generator 102, 202, to the display output component 108, 208r. In some examples, the display generator 102, 202 is certified with the highest DAL (e.g., DAL A) and the display output component 108, 208 is also certified with the highest DAL.

The primary image of the area of interest 1024 may be inputted to the ML models to determine probability of the primary image matching the symbology associated with the area of interest. The symbology associated with the area of interest is selected at 1020. Then the system is configured to determine an upper threshold for determining the integrity of the display output (e.g., the symbology) 1032. Additionally, the system is configured to determine probability of the primary image matching any of commonly confused symbols 1034. Then the system is configured to determine a lower threshold for determining the integrity of the display output (e.g., the symbology) 1036. The captured primary image may be used to train the ML models. The primary image may comprise a warped image. In such case, the warped image has been created at the first part of the display generation path, having a high DAL. The system 1000 is capable of determining the relevant probabilities used forward direction of the display generation path (e.g., using the captured primary image) as well as feedback direction of the display generation path (e.g., using the resultant image). This provides a more accurate and robust system.

In some examples, the system is configured to generate a ML model of the display generation path, wherein the model comprises the display output being generated, at least one frame being constructed for the display output and displayed on the display system as the resultant image 1010. Such ML model will be trained on a frame generated from the display output. The frame (e.g., the display output) being delivered at component 1006 but before influenced by other potential degradation causes may be included in training datasets. The frame which has been influenced by the potential causes of degradation mentioned herein may be included in the training datasets as well as the resultant image. For training, for each captured primary image, at least one corresponding secondary image may be generated. The generated at least one corresponding secondary image may comprise a raw secondary image, a processed secondary image or both. Training dataset may comprise pairs of the captured primary image and the corresponding secondary image. The primary image for training is expected to be generated accurately. The corresponding secondary image may be simulated or approximated to compensate for the state of the real world at runtime which cannot be accurately known when training. The secondary image may be based on the resultant image.

In some examples, the system is configured to generate display output comprising the symbology in response to the integrity of the symbology satisfying the predetermined condition. In some examples, the system is configured to perform one or more remedial actions in response to the integrity of the symbology fail to satisfy the predetermined condition. The remedial actions may comprise generating a blank instead of the symbology; generating a blank image as the display output; haloing the symbology; highlighting the symbology; initiating automatic cross check amongst data available in the system of the vehicle via a data bus; outputting a warning that there is error in the display output; outputting a warning that the user needs to perform cross check; restarting the display system; turning off the display system; and outputting only the most essential portion of the display output. Figure 4A illustrates a remedial action of haloing. In Figure 4A, text "2180 RA" occults its immediate background to increase the contrast between the text and its background as the haloing or casing is performed on text "2180 RA". In contrast, the text "M 0.28 G 1.0" is less readable without any haloing or casing of its symbology.

In some examples, the system is configured to determine criticality of the area of interest. For example, if the altitude is shown with four characters such as 2002, then the first of the four characters '2' is deemed to be more critical than the last of the four characters '2'. Even though they are the same number '2', depending on the position of the number the value being represented differ significantly (e.g., value being 2000 and 2). When the user controls the vehicle and changes the vehicle's path, having informed of an erroneous number in the last digit is less likely to have an impact than having informed of an erroneous number in the first digit of the four characters. The system 1000 is configured to select a critical object 1020 from the display output. The display output may be taken at the stage of creating a symbol from vehicle data. The system may be configured to select an interval for monitoring the integrity of the symbology associated with the area of interest in response to determining the criticality. If the represented value of the symbology is critical (e.g., 2000) then the system 1000 is configured to check it more frequently.

The trained model may be stored on a server and during the maintenance of the vehicle, the system may be updated and trained. The system is configured to generate a subset of the model for a run-time operation. Only a necessary compact model and relevant database comprise part of the system, reducing memory capacity and computation time.

Figure 11 shows an example system overview 1100 of a system for monitoring integrity of display output. In particular, Figure 11 illustrates the relationship between probabilities and rules-based decision used by the system 1000 to monitor the integrity of the display output.

The system 1000 is configured to make a rules-based decision. The system 1000 is configured to determine constrains or permissions relates to the symbology. For example, the symbology associated with the area of interest can move, rotate, transform be obscured or distorted. The symbology associated with the area of interest (e.g., '8') can be confused with a particular symbol (e.g., '9'), cannot be confused with another symbol (e.g., '1') or can be misleading (e.g., '5') or cannot be misleading (e.g., '2'). The system is configured to generate probabilities 1130 based on the constraints or permissions 1120.

The system 1000 is configured to store the probabilities. The probabilities may be stored in a table format. The system 1000 may comprise a database of the pre-calculated probabilities. The system 1000 applies a rule-based decision on the probabilities 1134 based on the area of interest 1110. The rule-based decision may depend on the critical level of the symbology associated with the area of interest as described herein in relation to Figure 10. By using this rule-based logic, the system 1000 can subset the possible variances that could lead to an incorrect decision.

Figure 12 shows an example method for monitoring integrity of display output of a display system for a vehicle. At step 1202, an area of interest is extracted from the display output. At step 1210, an object in the area of interest is identified. At step 1220, a symbology associated with the area of interest is identified. At step 1230, the integrity of the object based on the area of interest and the symbology is determined. In this way, only a relevant area of interest is processed to determine integrity of the display output, in particular, a symbology that is associated with the area of interest.

In some examples, at step 1112, at least one rule-based criterion is applied to identify at least one selected from the group consisting of: the area of interest for extraction; the object in the area of interest; and the symbology associated with the area of interest.

In some examples, identifying an object in the area of interest 1210 comprises performing at least one selected from the group consisting of optical character recognition (OCR) and/or application of at least one machine learning (ML) model. In some examples, the method comprises a step of determining criticality of the area of interest and in response to determining the criticality, selecting the interval for monitoring the integrity of the symbology associated with the area of interest. This ensures priority can be taken as to which symbology and/or which area of interest is the most critical part of the information that needs to be communicated to the user. This also provides design flexibility to save computation time and resources. For example, only the most critical information (e.g., symbology) can be checked more often than less critical information. This also enables compact design of the system.

In some examples, a probability for the area of interest comprising an expected symbology is determined. Additionally, or alternatively, a probability for the area of interest comprising a similar symbology is determined.

In some examples, at step 1240, in response to the integrity of the symbology satisfying the predetermined condition, display output comprising the symbology is displayed.

In some examples, at step 1242 in response to the integrity of the symbology fail to satisfy the predetermined condition, one or more remedial actions are performed. The remedial actions may comprise generating a blank instead of the symbology; generating a blank image as the display output; haloing the symbology; highlighting the symbology; initiating automatic cross check amongst data available in the system of the vehicle via a data bus; outputting a warning that there is error in the display output; outputting a warning that the user needs to perform cross check; restarting the display system; turning off the display system; and outputting only the most essential portion of the display output. Only when the integrity of the object in the area of interest satisfies the design assurance level of the vehicle, the object is displayed. If the integrity of the object in the area of interest is not satisfactory and/or misleading then depending on different scenarios, various remedial actions can be performed. This ensures safety of the vehicle and its occupants. The remedial actions can be taken depending on the level of criticality of the error which provides a more refined system to cope with the error state.

In some examples, at step 1244 in response to determining the integrity of the object based on the area of interest and the symbology, the result of the determination is stored. The stored result may comprise one or more associated confidence values. The result is stored for maintenance purpose and for use as training data for the ML model used in the system.

In some examples, the method comprises a step of generating a model of a display path. The model comprises the display output being generated, at least one frame being constructed for the display output and displayed on the display system. The model may comprise the at least one frame being manipulated by at least one image processing techniques. The image processing techniques may be OCR, warping, anti-aliasing, optical transformations, digital-analogue transformations, distortions and video mixing. In this way, the machine learning model can be trained on images that contains a symbology that had been distorted in one way or another to provide more accurate model.

In some examples, the method comprises a step of determining design assurance level (DAL) of the display system. Difference in the need of DAL is taken into account as some parts of the system may comprise a COTS.

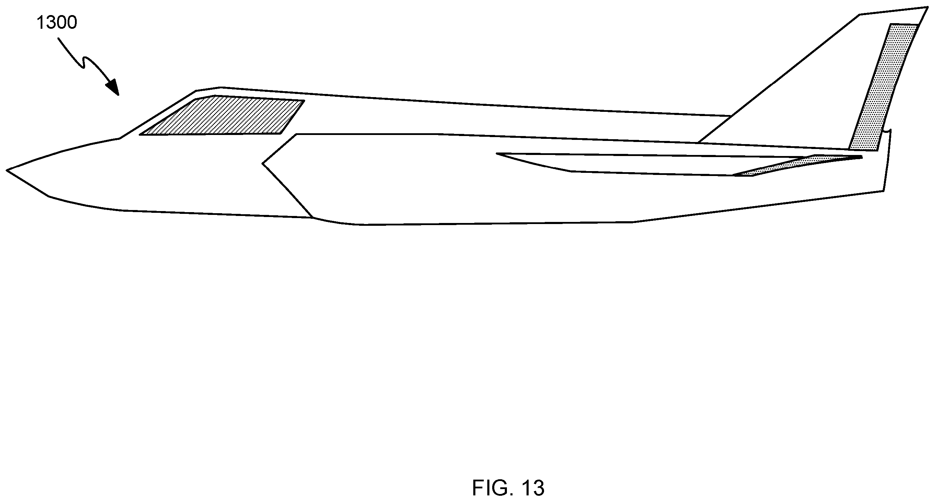

Figure 13 shows an example vehicle, wherein the vehicle is an aircraft 1300. The vehicle may be configured to perform the steps of methods described herein. The vehicle is in communication with the systems 200, 300, 1000 described herein. The vehicle is in communication with the display devices. The display devices may comprise the systems 200, 300, 1000 described herein. The vehicle may comprise the systems described herein. The system 200, 300, 1000 comprises one or more processors configured to perform any one of steps of the method described herein.

## Claims

1. A method for monitoring integrity of display output of a display system for a vehicle, the method comprising:
receiving (910) an image of the display output;
identifying (920) a symbology in the image;
determining (930) integrity of the image based on at least three dissimilar machine learning models.

2. The method according to claim 1, comprising:
each of the at least three dissimilar machine learning models, calculating (932) a respective confidence value for the image and identifying a respective tolerance threshold;
each of the three dissimilar machine learning models, determining whether the integrity of the image is compromised based on the respective confidence value and the respective tolerance threshold; and
determining (934) a consensus on the integrity of the image.

3. The method according to claim 1 or claim 2, comprising:
updating counter based on determination of the integrity of the image.

4. The method according to any one of the preceding claims the determining integrity of the image comprising:
comparing the symbology value with a data value from data bus of the vehicle.

5. The method according to any one of the preceding claims, comprising:
receiving the image from an image capture device system wherein the image capture device system is oriented to capture the display from the user's perspective.

6. The method according to claim 5, wherein the image capture device system comprises at least two image capture devices and each of the at least two image capture devices capture the image of the display output.

7. The method according to claim 5 or claim 6, wherein the image capture device system is mounted on a head wearable device and/or a cabin of a vehicle.

8. The method according to claim 5 to 7, comprising:
providing a first image by a first image capture device to a first machine learning model of the at least three machine learning models;
providing a second image by a second image capture device to a second machine learning model of the at least three machine learning models; and
providing a third image by a third image capture device to a third machine learning model of the at least three machine learning models.

9. The method according to any one of the preceding claims, wherein the receiving the image comprises:
generating (950) a static background for the display; and
capturing the image in synchronisation with the generation of the static background.

10. The method according to claim 9, wherein the static background comprises uniform colour.

11. The method according to claim 9 or claim 10 wherein, the static background is provided by an electrochromic tinting system.

12. The method according to claims 9 to 11 wherein, the static background is generated at a predetermined interval.

13. The method according to any one of the preceding claims, comprising:
in response to determining integrity of the image/the symbology is compromised, performing (942) one or more remedial actions.

14. A system for monitoring integrity of display output of a display system for a vehicle, the system is configured to perform any one of the steps of the preceding method claims.

15. A vehicle configured to perform the any of preceding method claims and/or comprise the system according to claim 14.
